# EUROPÄISCHE PATENTSCHRIFT

(11) **EP 3 074 676 B1**
(45) Veröffentlichungstag und Bekanntmachung des Hinweises auf die Patenterteilung: **19.04.2017**
(21) Anmeldenummer: 15703745.8
(22) Anmeldetag: 26.01.2015
(51) Int. Cl.: E03C 1/04, F16K 11/078, F16K 27/04

(54) **SANITÄRARMATUR**
SANITARY FITTING
ROBINETTERIE SANITAIRE

(30) Priorität: 12.03.2014 DE 202014101116 U
(43) Veröffentlichungstag der Anmeldung: 05.10.2016
(73) Patentinhaber: Flühs Drehtechnik GmbH, 58515 Lüdenscheid (DE)
(72) Erfinder: LANGE, Lutz, 58511 Lüdenscheid (DE)
(74) Vertreter: Patentanwälte Dörner & Kötter PartG mbB
(86) Internationale Anmeldenummer: PCT/EP2015/051474
(87) Internationale Veröffentlichungsnummer: WO 2015/135675

(56) Entgegenhaltungen:
- WO-A1-96/29530
- DE-U1-202008 003 921
- US-A- 2 620 813
- US-A1- 2013 056 664

## Beschreibung

Die Erfindung betrifft eine Sanitärarmatur nach dem Oberbegriff des Patentanspruchs 1.

Derartige Armaturen werden zur gesteuerten Mischung von Heiß- und Kaltwasser mit nachfolgender Ausgabe eingesetzt. Sie umfassen ein Ventiloberteil, durch das die Mischung und Ausgabe des Wassers aus der Armatur gesteuert wird. Hierzu ist das Ventiloberteil in das Gehäuse der Armatur geschraubt. Das Ventiloberteil ist über einen Drehgriff oder Hebel bedienbar. Ein derartiges Ventiloberteil ist bspw. in der DE 20 2012 106 168 U1 beschrieben. Ein solches Ventiloberteil besteht im Wesentlichen aus einem Kopfstück, in der eine Spindel axial hineinragt, die in einer drehbar gelagerten Spindelaufnahme schwenkbar gelagert ist und in ein Gleitstück eingreift, das mit einer Steuerscheibe verbunden ist, die mit einer Durchlassscheibe korrespondiert, welche über eine Dichtung gegenüber einer Anschlussscheibe bzw. einem Bodenstück abgedichtet ist. Derartige Armaturen sind auch bekannt aus WO 9 629 530 A1, DE 20 2008 003 921 U1 oder US 2013/0056664 A1.

Bei der Montage des Ventiloberteils wird dieses in die Armatur eingebracht, wobei die Spindel des Ventiloberteils derart ausgerichtet ist, dass der auf dieser aufzusteckende Bedienhebel sich in Mittelstellung in Flucht mit dem Auslauf der Armatur befindet. Die Mittelstellung des Bedienhebels ist die Stellung, in der Warmwasser und Kaltwasser zu gleichen Teilen durchmischt durch den Auslauf strömen, wodurch eine mittlere Wassertemperatur gegeben ist. Aus Energiespargründen wird in manchen Ländern gefordert, dass die Hebelstellung in Flucht mit dem Auslauf eine Ausgabe von kaltem Wasser bewirkt. Dieses folgt aus dem regelmäßigen Verhalten des Bedieners, aus optischen Gründen den Bedienhebel in geschlossener Ventilstellung in Flucht mit dem Auslauf zu positionieren. Hierdurch ergibt sich die Problematik, dass bei den vorbekannten Armaturen lediglich eine definierte Position der Spindel des Ventiloberteils nach dem dieses in die Armatur eingebracht ist, gegeben ist, weshalb für die zuletzt genannte, sogenannte "Cold-Start"-Position eine separate Armaturausführung erforderlich ist.

Hier will die Erfindung Abhilfe schaffen. Der Erfindung liegt die Aufgabe zu Grunde, eine Armatur der vorgenannte Art bereitzustellen, die sowohl eine Mischwasserposition als auch eine Cold-Start-Position bei Flucht des Bedienhebels mit dem Auslauf der Armatur ermöglicht. Gemäß der Erfindung wird diese Aufgabe durch die Merkmale des kennzeichnenden Teils des Patentanspruchs 1 gelöst.

Mit der Erfindung ist eine Sanitärarmatur des Bedienhebels bereitgestellt, die eine Mischwasser- sowie eine Cold-Start-Position bei Flucht des Bedienhebels mit dem Auslauf der Armatur ermöglicht. Durch die Mittel zur definierten Positionierung des Ventiloberteils innerhalb des Rohrstücks in wenigstens zwei um einen Ausrichtwinkel versetzte Drehpositionen ist eine definierte Ausrichtung der Spindel bei der Montage des Ventiloberteils in der Armatur ermöglicht, wodurch die gewünschte Ausrichtung des auf der Spindel aufgesteckten Bedienhebels erzielt ist. Dabei beträgt der Ausrichtwinkel zwischen wenigstens zwei definierten Drehpositionen, das sind zwei um einen Winkel zueinander verdrehte mögliche Positionen des Ventiloberteils innerhalb des Rohrstücks, vorteilhaft zwischen 15° und 90°, bevorzugt zwischen 25° und 60°, besonders bevorzugt 45°. Durch die Wahl des Drehwinkels ist die Ventilstellung des Ventiloberteils bei mit dem Auslauf fluchtenden, auf der Spindel aufgesteckten Bedienhebel einstellbar, sodass auch andere Stellungen als die "Cold-Start-Position" festlegbar sind.

In Ausgestaltung der Erfindung ist das Ventiloberteil über einen Befestigungsring mit dem Rohrstück verbunden. Dabei kann die Verbindung beispielsweise in Form einer Schraub-, Bajonett- oder Rastverbindung ausgeführt sein.

Bevorzugt ist der Ventilsitz durch einen vorzugsweise zylindrisch ausgebildeten Ventilsitzkörper gebildet, der bevorzugt lösbar innerhalb des Rohrstücks angeordnet ist.

In Weiterbildung der Erfindung ist an der Innenwandung des Rohrstücks eine Nase angeordnet, die mit wenigstens zwei um den Ausrichtwinkel versetzt an dem Außenmantel des Ventiloberteils eingebrachten Ausnehmungen korrespondiert. Hierdurch ist eine einfache Ausrichtung des Ventiloberteils in dem Rohrstück in "Mischwasser"-Position bzw. "Cold-Start"-Positionen (beziehungsweise der gewünschten Position) ermöglicht. Alternativ kann auch an dem Außenmantel des Ventiloberteils eine Nase angeordnet sein, die mit wenigstens zwei um den Ausrichtwinkel versetzt an der Innenwandung des Rohrstücks angebrachten Ausnehmungen korrespondiert.

In Ausgestaltung der Erfindung weist der Ventilsitzkörper wenigstens eine Positionierbohrung auf, der mit einem an dem Ventiloberteil angeordneten wenigstens einen Positionierstift korrespondiert, wobei der Ventilsitzkörper in dem Rohrstück auf einem innerhalb des Rohrstücks angeordneten, zumindest bereichsweise umlaufenden Absatz aufliegt, wobei unterhalb bzw. im Bereich des Absatzes oder an dem Außenmantel des Ventilsitzkörpers eine Nase angeordnet ist, die mit wenigstens zwei um den Ausrichtwinkel versetzt in dem Außenmantel des Ventilsitzkörpers bzw. unterhalb bzw. im Bereich des Absatzes eingebrachten Ausnehmungen korrespondiert. Der an dem Ventiloberteil angeordnete wenigstens eine Positionierstift greift im montierten Zustand in die wenigstens eine Positionierbohrung des Ventilsitzkörpers ein, wodurch eine definierte Positionierung des Ventiloberteils an dem Ventilsitzkörper gewährleistet ist. Eine solche definierte Positionierung ist gleichsam durch Vorsehen eines Positionierstifts an dem Ventilsitzkörper ermöglicht, der entsprechend in eine an dem Ventiloberteil vorgesehene Positionierbohrung eingreift. Die so gebildete Einheit aus Ventiloberteil und Ventilsitzkörper kann nun durch Positionierung der an dem Ventilsitzkörper angeordneten Nase in eine der um den definierten Ausrichtwinkel versetzt in dem Steg eingebrachten Ausnehmungen positioniert werden. Derselbe Effekt ist dadurch erzielbar, dass an dem Steg eine Nase angeordnet ist, die mit wenigstens zwei um den Ausrichtwinkel versetzt in den Außenmantel des Ventilsitzkörpers eingebrachten Ausnehmungen korrespondiert. Vorteilhaft ist der wenigstens eine Positionierstift bzw. die wenigstens eine Positionierbohrung des Ventiloberteils an einem Bodenstück angeordnet, das an der der Steuerscheibe entgegengerichteten Seite der Durchlassscheibe des Ventiloberteils in dem Kopfstück angeordnet ist.

In Weiterbildung der Erfindung sind in dem Ventilsitzkörper zwei Kanäle eingebracht, die jeweils in einem Durchlasskanal des Ventiloberteils münden, wobei die Kanäle des Ventilsitzkörpers an ihrer dem Ventiloberteil abgewandten Unterseite mit einem Anschluss zur lösbaren Befestigung von Zulaufleitungen versehen sind. Hierdurch ist eine einfache Montage der Armatur ermöglicht. Dabei kann der Anschluss der Zulaufleitungen bspw. über eine Schraubverbindung oder auch über eine Bajonettverbindung erfolgen.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung einer Sanitärarmatur in Mischwasserposition
a) im Längsschnitt;
b) im Querschnitt A-A;
c) in der Draufsicht mit angedeuteter Kalt- und Heißwasserposition;
- Figur 2: die Darstellung der Sanitärarmatur aus Figur 1 im Cold-StartPosition
a) im Längsschnitt;
b) im Querschnitt A-A;
c) in der Draufsicht;

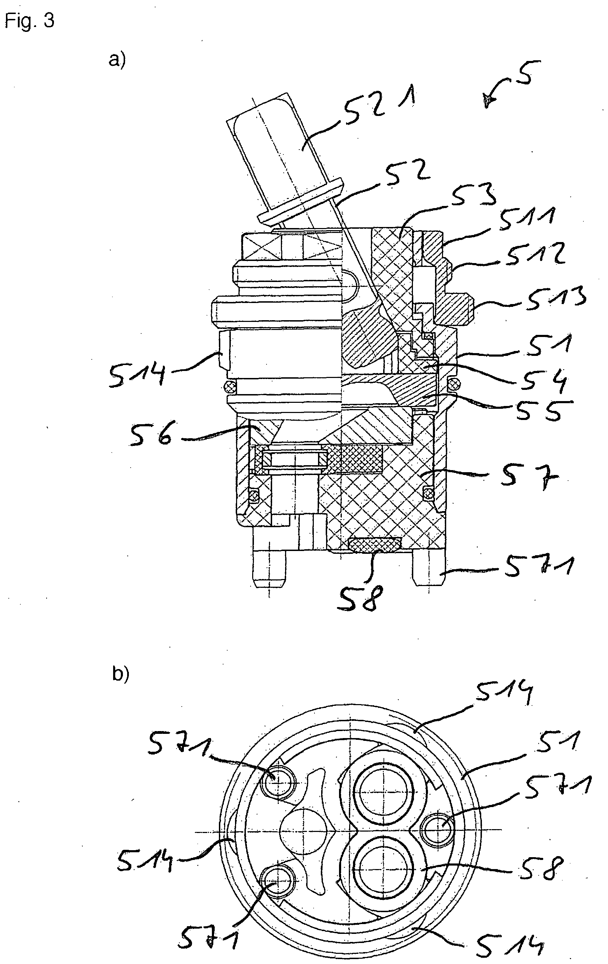

- Figur 3: die schematische Darstellung des Ventiloberteils der Sanitärarmatur aus Figur 1
a) im Teilschnitt;
b) in der Ansicht von unten;

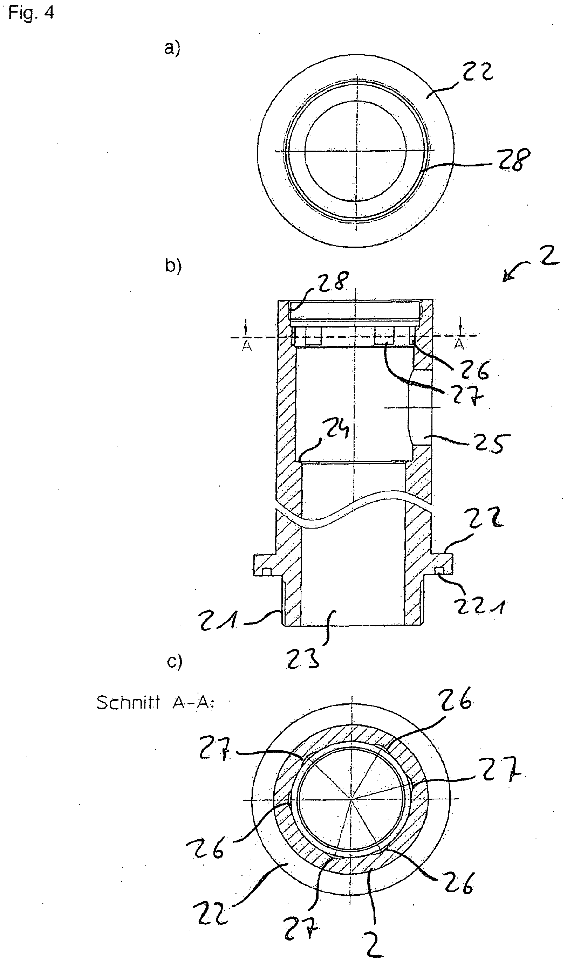

- Figur 4: die Darstellung des Rohrstücks der Sanitärarmatur aus Figur 1
a) in der Draufsicht;
b) im Längsschnitt;
c) im Querschnitt A-A;

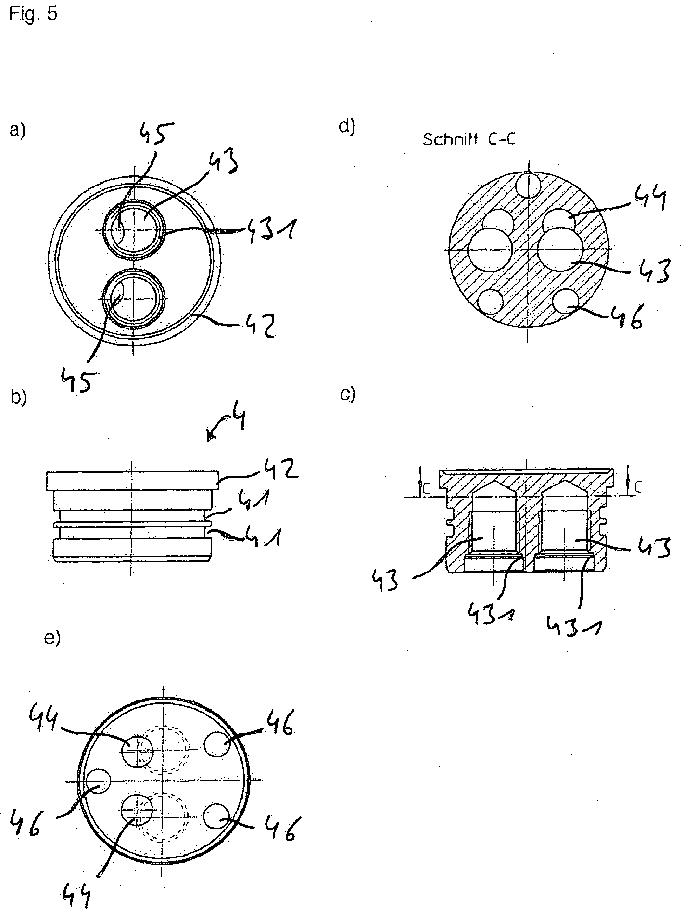

- Figur 5: die schematische Darstellung des Ventilsitzkörpers der Sanitärarmatur aus Figur 1
a) in der Ansicht von unten;
b) in der Seitenansicht;
c) im Längsschnitt;
d) im Querschnitt C-C;
e) in der Draufsicht;
- Figur 6: die schematische Darstellung einer Sanitärarmatur in einer weiteren Ausführungsform in Mischwasserposition
a) im Längsschnitt;
b) im Querschnitt A-A;
c) in der Draufsicht mit angeordneter Kalt- und Heißwasserposition;

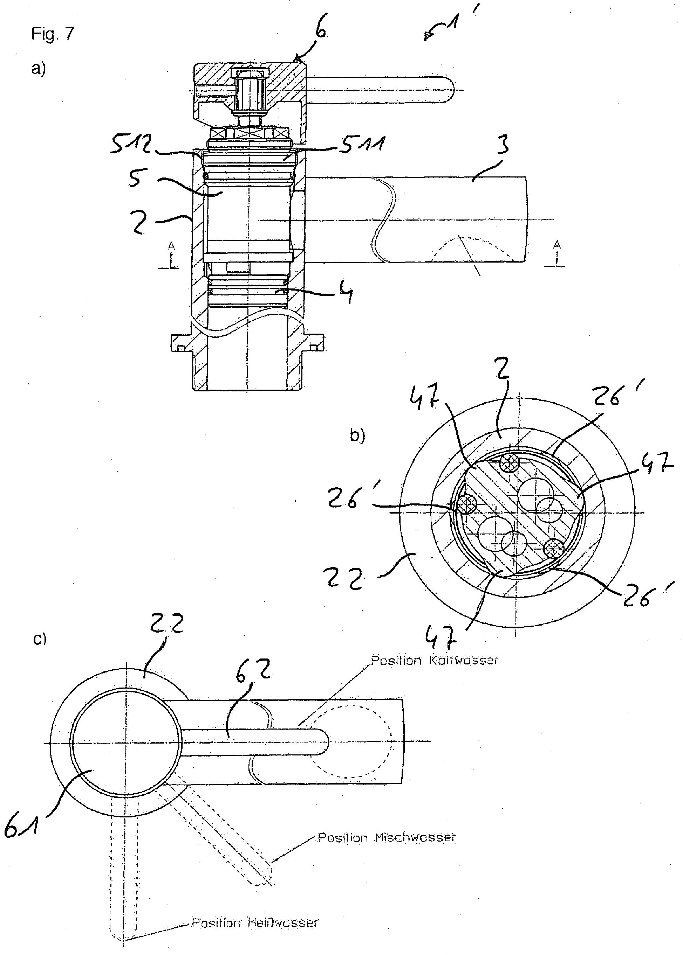

- Figur 7: die Darstellung der Sanitärarmatur aus Figur 6 in Cold-Start-Position
a) im Längsschnitt;
b) im Querschnitt A-A;
c) in der Draufsicht;

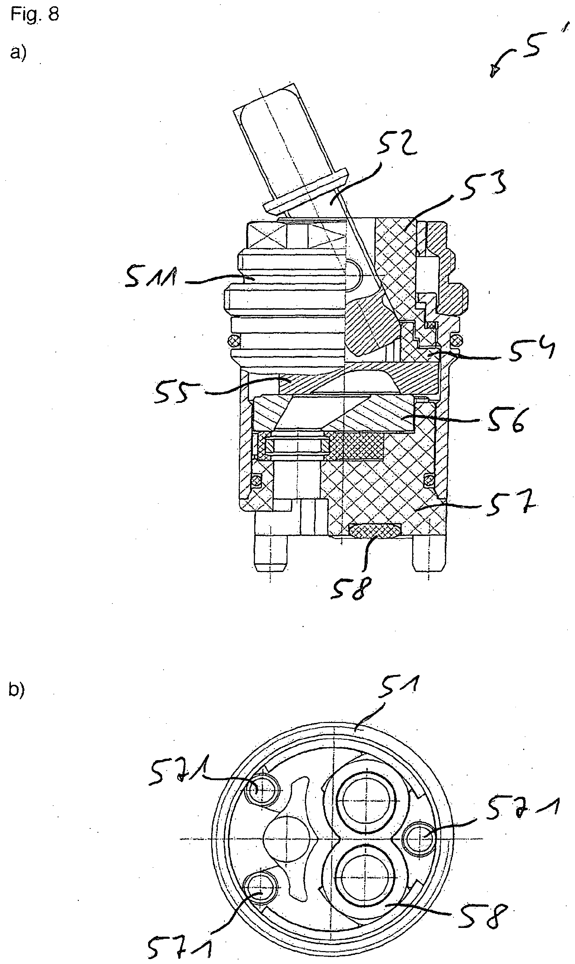

- Figur 8: die schematische Darstellung des Ventiloberteils der Sanitärarmatur aus Figur 6
a) im Teilschnitt;
b) in der Ansicht von unten;
- Figur 9: die Darstellung des Rohrstücks der Sanitärarmatur aus Figur 6
a) in der Draufsicht;
b) im Längsschnitt;
c) im Querschnitt A-A;
- Figur 10: die schematische Darstellung des Ventilsitzkörpers der Sanitärarmatur aus Figur 6
a) in der Ansicht von unten;
b) in der Seitenansicht;
c) im Längsschnitt;
d) im Querschnitt A-A;
e) im Längsschnitt B-B;
f) in der Draufsicht.

Die als Ausführungsbeispiel gewählte Sanitärarmatur 1 besteht im Wesentlichen aus einem Rohrstück 2, das mit einem orthogonal zu diesem angestellten Auslauf 3 versehen ist, das einen Ventilsitzkörper 4 aufnimmt, an dem ein Ventiloberteil 5 anliegt, das über einen Bedienhebel 6 bedienbar ist.

Das Rohrstück 2 ist im Wesentlichen hohlzylindrisch ausgebildet und weist endseitig ein Außengewinde 21 auf, an das sich ein umlaufender Flansch 22 anschließt, der an seiner dem Außengewinde 21 zugewandten Unterseite mit einer umlaufenden Nut 221 zur Aufnahme eines Dichtungsrings versehen ist. Die Durchgangsbohrung 23 des Rohrstücks 2 weist einen durchmessererweiterten Abschnitt auf, durch den ein Absatz 24 zur Auflage des Ventilsitzkörpers 4 gebildet ist. Oberhalb des Absatzes 24 ist in das Rohrstück 2 eine Seitenbohrung 25 zur Aufnahme des Auslaufs 3 eingebracht. Oberhalb der Seitenbohrung 25 sind in die Innenwandung des Rohrstücks 2 jeweils um 120° versetzt zueinander drei muldenförmige erste Ausnehmungen 26 eingebracht. Jeweils um einen Ausrichtwinkel von im Ausführungsbeispiel 45° versetzt zu diesen ersten Ausnehmungen 26 sind weiterhin drei zweite Ausnehmungen 27 angeordnet, welche wiederum zueinander um jeweils 120° zueinander versetzt sind. An seinem dem Außengewinde 21 gegenüberliegenden Ende ist in das Rohrstück 2 ein Innengewinde 28 zur Aufnahme des ersten Außengewindes 512 der Schraubhülse 511 des Kopfstücks 51 des Ventiloberteils 2 eingebracht.

Der Ventilsitzkörper 4 ist im Wesentlichen zylinderförmig ausgebildet. In seiner Außenmantelfläche sind nebeneinander zwei Nuten 41 zur Aufnahme von Dichtringen eingebracht. Endseitig ist an den Ventilsitzkörper 4 ein umlaufender Kragen 42 angeformt. An seiner dem Kragen 42 entgegengerichteten Unterseite sind in den Ventilsitzkörper 4 diametral zwei Sackbohrungen 43 eingebracht, die jeweils endseitig mit einem Innengewinde 431 versehen sind. Versetzt zu den Sackbohrungen 43 sind auf der dem Kragen 42 zugewandten Oberseite des Ventilsitzkörpers 4 weiterhin zwei Sackbohrungen 44 eingebracht, die sich mit den Sackbohrungen 43 überlappen, so dass ein durchgehender Kanal 45 gebildet ist. Weiterhin sind auf der Oberseite des Ventilsitzkörpers 4 drei Positionsbohrungen 46 zur Aufnahme der Positionierstifte 571 des Bodenstücks 57 des Ventiloberteils 5 angeordnet.

Das Ventiloberteil 5 ist im Wesentlichen gebildet durch ein Kopfstück 51, in das eine Spindel 52 axial hineinragt, die in einer drehbar gelagerten Spindelaufnahme 53 schwenkbar gelagert ist und die in einem Gleitstück 54 eingreift, das mit einer Steuerscheibe 55 verbunden ist, die mit einer Durchlassscheibe 56 korrespondiert, an die sich ein Bodenstück 57 anschließt, welches ein Dichtungsformteil 58 aufnimmt. An dem Bodenstück 57 sind beabstandet zueinander drei Positionierstifte 571 zum Eingriff in die Positionierbohrungen 56 des Ventilsitzkörpers 4 angeformt. An dem Kopfstück 51 ist verliersicher eine Schraubhülse 511 gehalten, die ein ersten Außengewinde 512 zum Einschrauben in das Innengewinde des Rohrstücks 2 aufweist. Oberhalb des ersten Außengewindes 512 ist ein zweites Außengewinde 513 zur Befestigung des Kopfteils 61 des Bedienhebels 6 angebracht. Umlaufend sind an dem Kopfstück 51 jeweils um 120° versetzt zueinander drei Nasen 514 angeordnet, deren Außenkontur im Wesentlichen der Innenkontur der ersten Ausnehmungen 26 sowie der zweiten Ausnehmungen 27 des Rohrstücks 2 entspricht.

Der Bedienhebel 6 besteht im Wesentlichen aus einem kappenförmigen Kopfteil 61, an dem seitlich ein Griff 62 angeformt ist und das innen mit einer Aufnahme 63 versehen ist, mit der das Kopfteil 61 auf das an der Spindel 52 des Ventiloberteils 5 angeformte Vierkantstück 521 aufschiebbar ist. Seitlich ist in,das Kopfteil 61 eine Gewindebohrung 64 eingebracht, die in der Aufnahme 63 mündet. Die Gewindebohrung 64 nimmt eine - nicht dargestellte - Madenschrauben zur Fixierung des Kopfteils 61 auf dem Vierkantstück 521 des Ventiloberteils 5 auf.

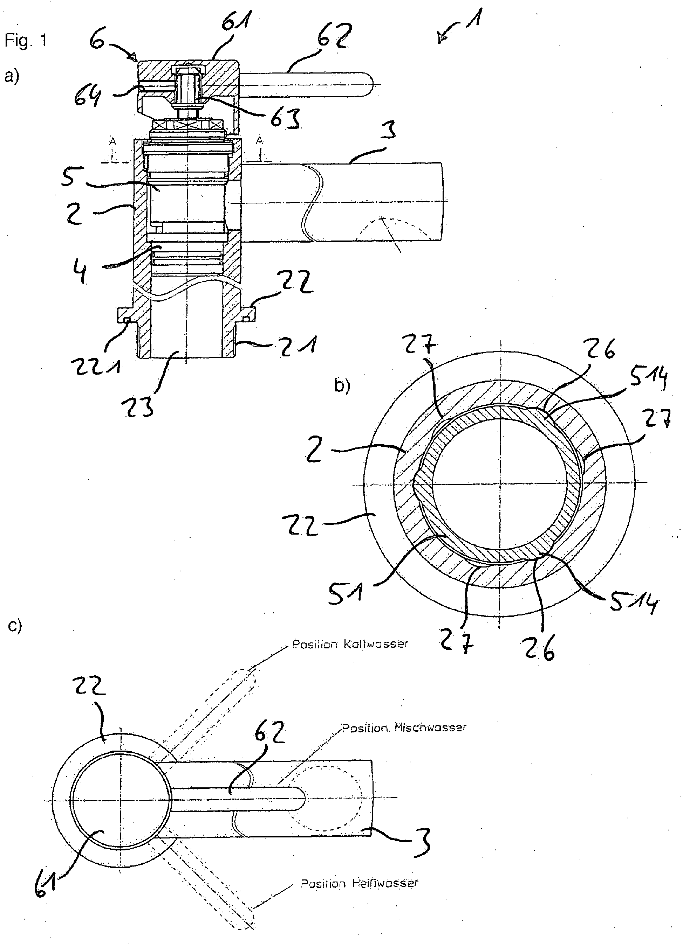

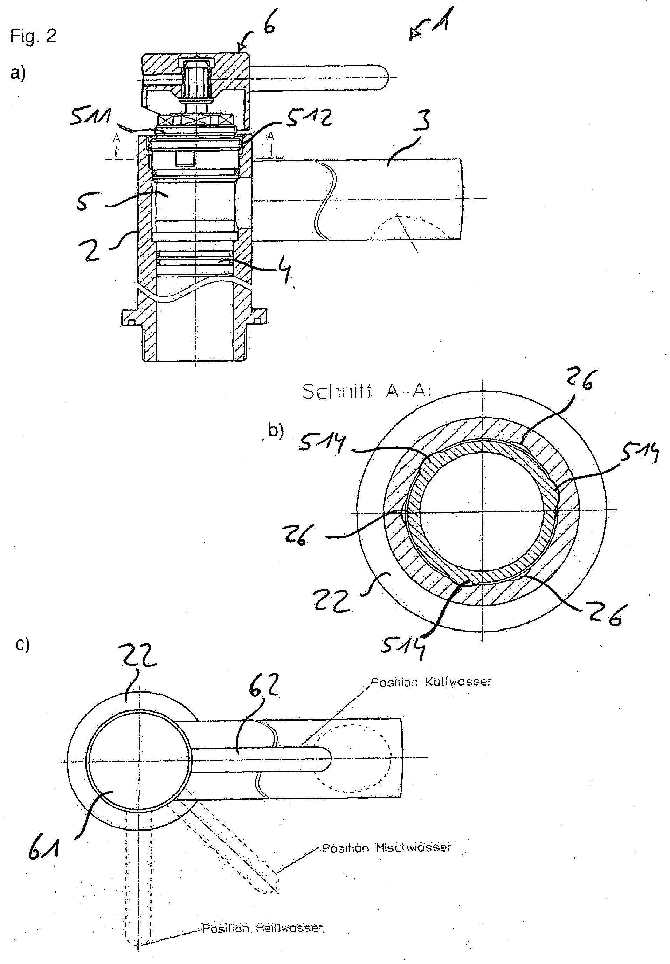

Der Ventilsitzkörper 4 ist derart in das Rohrstück 2 eingebracht, dass er mit seinem umlaufenden Kragen 42 auf dem Absatz 24 des Rohrstücks aufliegt. Der Ventilsitzkörper 4 ist so drehbar innerhalb des Rohrstücks 2 gehalten. Das Ventiloberteil 5 ist auf den Ventilsitzkörper 4 montiert, wobei die Positionierstifte 571 des Bodenstücks 57 des Ventiloberteils 5 in die Positionierbohrungen 46 des Ventilkörpers 4 eingreifen. Im Zuge der Montage kann das Ventiloberteil 5 nun derart in das Rohrstück 2 eingebracht werden, dass die drei umlaufend angeordneten, an dem Kopfstück 51 angeformten Nasen 514 entweder in die ersten Ausnehmungen 26 oder aber in die zweiten Ausnehmungen 27 des Rohrstücks eingreifen, welche um einen Ausrichtwinkel von 45° versetzt zu den ersten Ausnehmungen 226 positioniert sind. Hierdurch ist im Zuge der Montage des Ventiloberteils 5 in dem Rohrstück 2 einstellbar, ob die Sanitärarmatur 1 in Mischwasser-Position (vgl. Figur 1) oder in Cold-Start-Position (vgl. Figur 2) eingerichtet wird. In der gewünschten Position wird das Ventiloberteil 5 nachfolgend über die Schraubhülse 511 fixiert, welche mit ihrem ersten Außengewinde 512 in das Innengewinde 28 des Rohrstücks 2 eingeschraubt wird, wodurch das Ventiloberteil axial gegen den Ventilsitzkörper 4 verspannt wird.

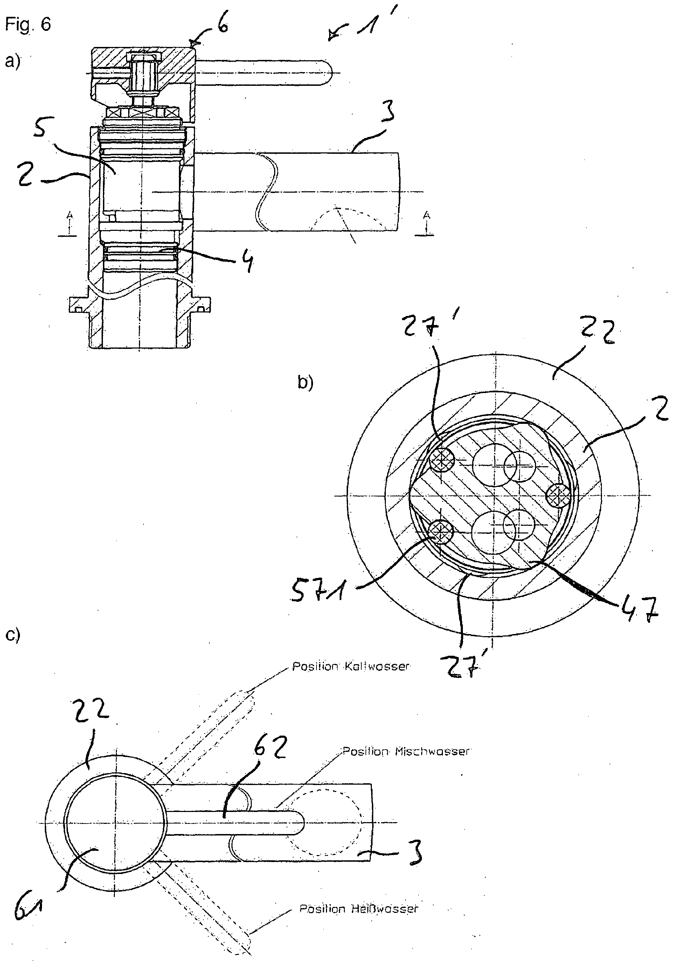

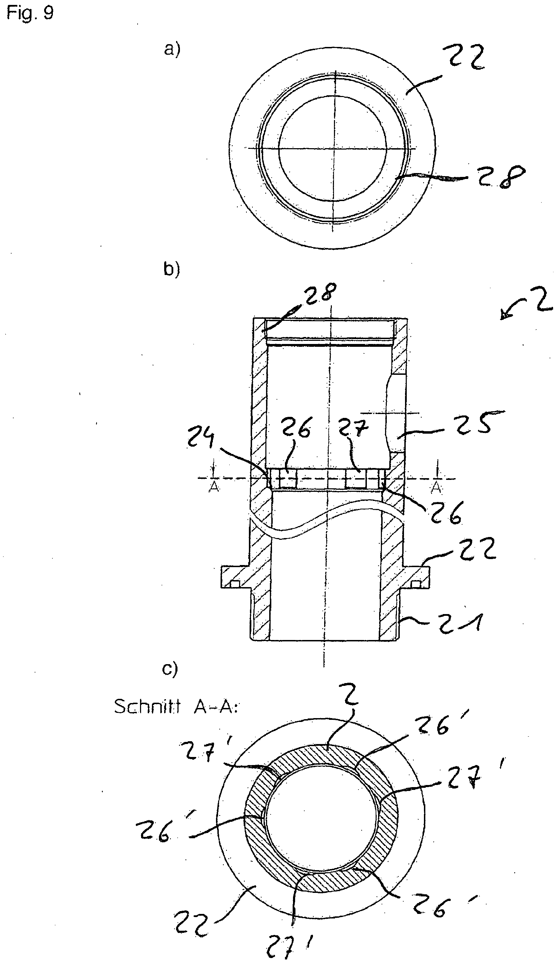

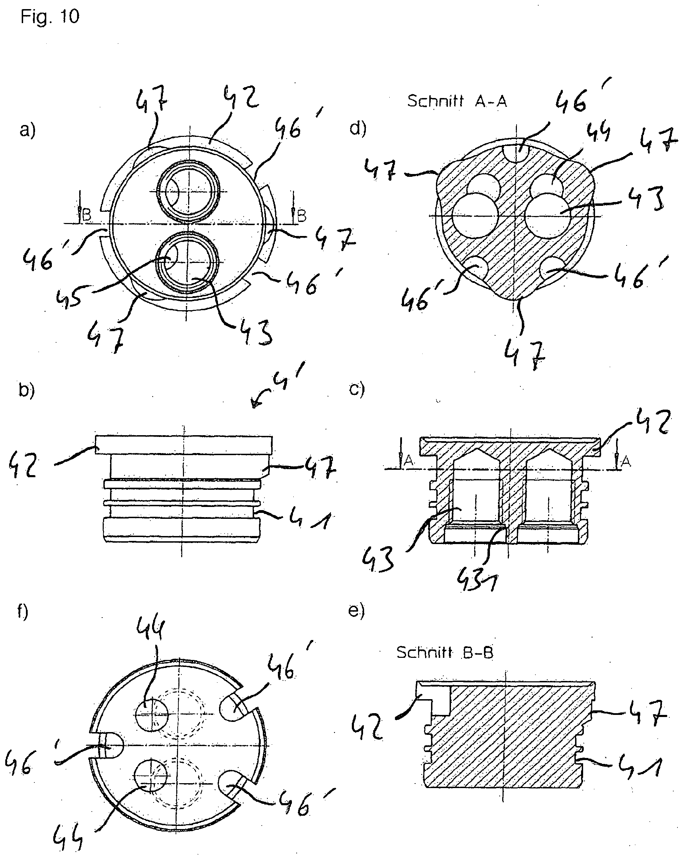

Im Ausführungsbeispiel gemäß Figur 6 sind die ersten Ausnehmungen 26 sowie die um einen Ausrichtwinkel von 45° zu diesen versetzten zweiten Ausnehmungen 27 in Höhe des Absatzes 24 in der Innenwandung des Rohrstücks 2 eingebracht (vgl. Figur 9). Die hiermit korrespondierenden drei um 120° zueinander versetzten Nasen sind in diesem Ausführungsbeispiel unterhalb des Kragens 42 an dem Ventilsitzkörper 4 angeformt (vgl. Figur 10). Der Ventilsitzkörper 4 kann somit derart in dem Rohrstück 2 positioniert werden, dass die drei umlaufenden Nasen 47 entweder in die ersten Ausnehmungen 26 oder aber in die um den Ausrichtwinkel von 45° versetzt zu diesen angeordneten zweiten Ausnehmungen 47 des Rohrstücks 2 eingebracht werden, wonach der umlaufende Kragen 42 des Ventilsitzkörpers 4 auf dem Absatz 24 des Rohrstücks 2 zur Anlage kommt. Um bei der Positionierung eine Sicht auf die ersten Ausnehmungen 26 bzw. die zweiten Ausnehmungen 27 zur ermöglichen, sind die Positionierbohrungen 26 in dem Ventilsitzkörper 4 radial nach außen hin geöffnet ausgeführt. Die Anordnung des Ventilsitzkörpers 4 in dem Rohrstück 2 erfolgt bevorzugt über im Vorfeld in die Sackbohrungen 43 des Ventilsitzkörpers 4 eingeschraubte Leitungen, die endseitig aus dem Rohrstück 2 hinausragen. Von oben kann dabei über die radial geöffneten Positionierbohrungen 46 die Drehposition des Ventilsitzkörpers 4 innerhalb des Rohrstücks 2 kontrolliert werden.

Nach erfolgter Positionierung des Ventilsitzkörpers 4 in dem Rohrstück 2 muss das Ventiloberteil 5 wiederum auf dem Ventilsitzkörper 4 positioniert werden, wobei die Positionierstifte 571 des Bodenstücks 57 des Ventiloberteils 5 in die nach außen geöffneten Positionierbohrungen 46 des Ventilsitzkörpers 4 eingebracht werden. Hierüber erfolgt gleichsam die definierte Drehausrichtung des Ventiloberteils 5 in Mischwasser- bzw. Cold-Start-Position. Anschließend wird das Ventiloberteil 5 wiederum über die Schraubhülse 511 des Kopfstücks 21, die in das Innengewinde 28 des Rohrstücks 2 eingeschraubt wird, gegen den Ventilsitzkörper 4 verspannt und das Kopfteil 61 des Bedienhebels 6 wird auf dem Vierkantstift 521 der Spindel 52 montiert.

## Patentansprüche

1. Sanitärarmatur, umfassend ein einen Ventilsitz aufweisendes Rohrstück, das ein Ventiloberteil aufnimmt, das an dem Ventilsitz anliegt und das ein Kopfstück umfasst, das von einer Spindel mittig durchsetzt ist, die in dem Kopfstück drehbar und/oder schwenkbar gelagert ist und über die innerhalb des Kopfstücks eine Steuerscheibe relativ zu einer Einlassscheibe bewegbar ist, wobei das Ventiloberteil mit dem Rohrstück lösbar verbunden ist, wobei Mittel zur definierten Positionierung des Ventiloberteils (5) innerhalb des Rohrstücks (2) in wenigstens zwei um einen Ausrichtwinkel versetzten Drehpositionen angeordnet sind, wobei der Ventilsitz durch einen Ventilsitzkörper (4) gebildet ist, der innerhalb des Rohrstücks (2) angeordnet ist, wobei der Ventilsitzkörper (4) wenigstens eine Positionierbohrung (46) bzw. einen Positionierstift aufweist, der mit einem an dem Ventiloberteil (5) angeordneten wenigstens einen Positionierstift (571) bzw. Positionierbohrung korrespondiert, wobei der Ventilsitzkörper (4) in dem Rohrstück (2) auf einem innerhalb des Rohstücks (2) angeordneten, zumindest bereichsweise umlaufenden Absatz (24) aufliegt und in dem Ventilsitzkörper (4) zwei Kanäle (45) eingebracht sind, die jeweils in einem Durchlasskanal des Ventiloberteils (5) münden, wobei die Kanäle (45) des Ventilsitzkörpers (4) an ihrer dem Ventiloberteil (5) abgewandten Unterseite mit einem Anschluss zur lösbaren Befestigung von Zulaufleitungen versehen sind, **dadurch gekennzeichnet, dass** entweder
1.) unterhalb des Absatzes (24) oder an dem Außenmantel des Ventilsitzkörpers (4) eine Nase angeordnet ist, die mit wenigstens zwei um den Ausrichtwinkel versetzt in dem Außenmantel des Ventilsitzkörpers (4) bzw. unterhalb des Absatzes (24) eingebrachten Ausnehmungen (26, 27) korrespondiert, oder
2.) der Ventilsitzkörper 4 innerhalb des Rohrstücks (2) drehbar ist und an der Innenwandung des Rohrstücks (2) oder an dem Außenmantel des Ventiloberteils (5) eine Nase (514) angeordnet ist, die mit wenigstens zwei um den Ausrichtwinkel versetzt an dem Außenmantel des Ventiloberteils bzw. an der Innenwandung des Rohrstücks eingebrachten Ausnehmungen (26, 27) korrespondiert.

2. Sanitärarmatur nach Anspruch 1, **dadurch gekennzeichnet, dass** der Ausrichtwinkel zwischen 15° und 90°, bevorzugt zwischen 25° und 60°, besonders bevorzugt 45° beträgt.

3. Sanitärarmatur nach Anspruch 1 oder 2, **dadurch gekennzeichnet, dass** das Ventiloberteil 5 über einen Befestigungsring mit dem Rohrstück verbunden ist.

4. Sanitärarmatur nach einem der vorgenannten Ansprüche, **dadurch gekennzeichnet, dass** der wenigstens eine Positionierstift (571) bzw. die wenigstens eine Positionierbohrung des Ventiloberteils (5) an einem Bodenstück (57) angeordnet ist, das an der der Steuerscheibe (55) entgegen gerichteten Seite der Durchlassscheibe (56) in dem Kopfstück (51) angeordnet ist.

5. Sanitärarmatur nach einem der vorgenannten Ansprüche, **dadurch gekennzeichnet, dass** das Rohrstück und/öder der Ventilsitzkörper aus Messing hergestellt sind.

## Claims

1. Sanitary fitting, comprising a pipe section with a valve seat for the attachment of a valve upper section which rests on the valve seat and includes a headpiece which is penetrated centrally by a spindle which is mounted in the headpiece in rotatable or swivelling form and by means of which a control plate within the headpiece can be moved relative to an inlet plate, whereby the valve upper section has a detachable connection with the pipe section, whereby the means for defined positioning of the valve upper section (5) are located within the pipe section (2) in at least two rotational positions offset by an alignment angle, whereby the valve seat is formed by a valve seat body (4) which is located within the pipe section (2), whereby the valve seat body (4) has at least one positioning hole (46) or a positioning pin which corresponds to at least one positioning pin (571) or positioning hole located on the valve upper section (5), whereby the valve seat body (4) in the pipe section (2) rests on a ledge (24) located at last zonally within the pipe section and two channels (45) are located within the valve seat body (4) which each flow into an outlet channel of the valve upper section (5), whereby the channels (45) of the valve seat body (4) are fitted on their underside facing away from the valve upper section (5) with a connection for detachable fastening of supply lines, characterized inasmuch that either
1.) a lug is located underneath the ledge (24) or on the outer casing of the valve seat body (4) which corresponds to at least two recesses (26, 27) offset by the alignment angle on the outer casing of the valve seat body (4) or underneath the ledge (24), or
2.) the valve seat body (4) is rotatable within the pipe section and a lug (514) is located on the inner wall of the pipe section (2) or on the outer casing of the valve upper section (5) which corresponds to at least two recesses (26, 27) offset by the alignment angle on the outer casing of the valve seat body (4) or on the inner wall of the pipe section.

2. Sanitary fitting according to claim 1, **characterized in that** the alignment angle amounts to between 15° and 90°, preferably between 25° and 60°, in particular preferably 45°.

3. Sanitary fitting according to claim 1 or 2, **characterized in that** the valve upper section (5) is connected via a fastening ring on the pipe section.

4. Sanitary fitting according to one of the aforementioned claims, **characterized in that** at least one positioning pin (571) or at least one positioning hole of the valve upper section (5) is located on a base section (57) which is located in the headpiece (51) on the side of the outlet plate (56) positioned opposite to the control plate (55).

5. Sanitary fitting according to one of the aforementioned claims, **characterized in that** the pipe section and/or the valve seat body is made of brass.

## Revendications

1. Robinetterie sanitaire comprenant une section de tuyau présentant un siège de robinet qui abrite une partie supérieure de robinet, qui est en contact avec le siège de robinet et qui entoure une pièce de tête, dont le milieu est traversé par une tige, qui peut tourner et/ou pivoter dans la partie de tête et sur laquelle un disque de réglage peut se déplacer à l'intérieur de la partie de tête par rapport à un disque d'admission, ce faisant la partie supérieure de robinet est reliée de manière amovible à la section de tuyau, ce faisant des moyens de positionnement défini de la partie supérieure de robinet (5) sont disposés à l'intérieur de la section de tuyau (2) dans au moins deux positions de rotation décalées d'un angle d'orientation, ce faisant le siège de robinet est formé par un corps de siège de robinet (4) qui est disposé à l'intérieur de la section de tuyau (2), ce faisant le corps de siège de robinet (4) présente au moins un orifice de positionnement (46) et/ou une goupille de positionnement qui correspond à au moins une goupille de positionnement (571) prévue sur la partie supérieure de robinet (5) et/ou un orifice de positionnement, ce faisant le corps de siège de robinet (4) repose, dans la section de tuyau (2), sur un épaulement (24), du moins partiellement périphérique, prévu à l'intérieur de la section de tuyau (2) et deux canaux (45) débouchant respectivement dans un canal de passage de la partie supérieure de robinet (5) sont intégrés dans le corps de siège de robinet (4), ce faisant la face inférieure, tournée vers la partie supérieure de robinet (5) des canaux (45) du corps de siège de robinet (4) est dotée d'un raccordement à la fixation amovible de conduites d'alimentation **caractérisé en ce que** soit
1) en dessous de l'épaulement (24) ou sur l'enveloppe extérieure du corps de siège de robinet (4), est prévu un nez qui correspond à au moins deux évidements (26, 27), décalés autour de l'angle d'orientation, réalisés dans l'enveloppe extérieure du corps de siège de robinet (4) et/ou en dessous de l'épaulement (24), ou
2) le corps de siège de robinet 4 peut tourner à l'intérieur de la section de tuyau et sur la paroi intérieure de la section de tuyau (2) ou sur l'enveloppe extérieure de la partie supérieure de robinet (5) est prévu un nez (514) qui correspond à au moins deux évidements (26, 27), décalés autour de l'angle d'orientation, réalisés dans l'enveloppe extérieure de la partie supérieure de robinet et/ou sur la paroi extérieure de la section de tuyau.

2. Robinetterie sanitaire selon la revendication 1 **caractérisée en ce que** l'angle d'orientation est compris entre 15° et 90°, de préférence entre 25° et 60°, est en particulier de préférence de 45°.

3. Robinetterie sanitaire selon la revendication 1 ou 2 **caractérisée en ce que** la partie supérieure de robinet 5 est reliée à la section de tuyau via une bague de fixation.

4. Robinetterie sanitaire selon l'une des revendications précitées, **caractérisée en ce qu'**au moins une goupille de positionnement (571) et/ou au moins un orifice de positionnement de la partie supérieure de robinet (5) est disposé sur une pièce de fond (57) qui se trouve dans la pièce de tête, du côté du disque de passage (56) opposé au disque de commande (55).

5. Robinetterie sanitaire selon l'une des revendications précitées, **caractérisée en ce que** la section de tuyau et/ou le corps de siège de robinet sont réalisés en laiton.
